# EUROPEAN PATENT APPLICATION

(11) **EP 4 765 398 A1**
(43) Date of publication of application: **24.06.2026**
(21) Application number: 24853757.3
(22) Date of filing: 13.08.2024
(51) Int. Cl.: H01M 50/244, H01M 50/289, H01M 50/24, H01M 50/204

(54) **BATTERY AND ELECTRIC DEVICE**

(30) Priority: 15.08.2023 CN 202322194453 U
(71) Applicant: Contemporary Amperex Technology Co., Limited, Ningde, Fujian 352100 (CN)
(72) Inventor: WU, Kai, Ningde, Fujian 352100 (CN); LI, Xiang, Ningde, Fujian 352100 (CN); WU, Miangao, Ningde, Fujian 352100 (CN)
(74) Representative: Kraus & Lederer PartGmbB
(86) International application number: PCT/CN2024/111656
(87) International publication number: WO 2025/036348

(57) **Abstract**

The present application discloses a battery and an electric device. The battery comprises battery cells and a case. The case comprises a first plate, a second plate, and at least one side plate, the first plate and the second plate are oppositely arranged, the at least one side plate is connected to the first plate and the second plate and defines an accommodating cavity together with the first plate and the second plate, and the battery cells are arranged in the accommodating cavity. A recess is provided on the side of the first plate facing the second plate, and the at least one side plate is inserted into the recess and connected to the first plate.

## Description

### CROSS-REFERENCE TO RELATED APPLICATIONS

The present application claims priority to the Chinese Patent Application 202322194453. X filed on August 15, 2023 and entitled "BATTERY AND ELECTRIC APPARATUS", which is incorporated herein by reference in its entirety.

### TECHNICAL FIELD

The present application relates to the field of batteries, in particular to a battery and an electric apparatus.

### BACKGROUND

With the development of new energy technology, the application of batteries is becoming more and more widespread, for example, they are applied to mobile phones, notebook computers, battery cars, electric vehicles, electric aircraft, electric ships, electric toy cars, electric toy ships, electric toy aircraft, and electric tools, and the like.

In a battery, a box serves as an important component of the battery, and its assembly efficiency directly affects the production efficiency of the battery. Therefore, how to effectively improve the assembly efficiency of the box is an urgent problem to be solved in battery technology.

### SUMMARY

The present application provides a battery and an electric apparatus, which can improve the assembly efficiency of a box of the battery.

According to a first aspect, the present application provides a battery, which includes a battery cell and a box. The box includes a first plate, a second plate, and at least one side plate. The first plate and the second plate are disposed opposite each other, the at least one side plate is connected to the first plate and the second plate, and encloses an accommodating cavity together with the first plate and the second plate, and the battery cell is disposed in the accommodating cavity. A side of the first plate facing the second plate is provided with a recess, and the at least one side plate is inserted into the recess and connected to the first plate.

The recess can position the side plate during the process of assembling the box, to achieve the connection between the first plate and the side plate, thereby improving the assembly efficiency of the box and the production efficiency of the battery. The first plate can limit a portion of the side plate inserted into the recess, thereby enhancing the connection strength between the first plate and the side plate, and improving the stability of the box and the reliability of the battery.

In some embodiments, the battery further includes an adhesive, and at least part of the adhesive is accommodated in the recess and adheres the side plate to the first plate.

Using the adhesive to adhere the first plate to the side plate can reduce the requirements on the material of the first plate and the material of the side plate, achieving more flexible material selection of the first plate and the side plate. The adhesive can also fill a gap between the first plate and the side plate to play a sealing role and improve the sealing performance for the box. The recess can provide space for the adhesive, making the adhesive occupy less space of the box for accommodating the battery cell, thereby increasing the space utilization rate and the energy density of the battery.

In some embodiments, a density of the side plate is less than a density of the first plate. The side plate may have a smaller density to reduce the weight of the side plate and increase the energy density of the battery 2.

In some embodiments, the side plate is made of plastic, and the side plate is connected to the first plate by injection molding. Plastic has a small weight, so the use of a side plate made of a plastic material can reduce the weight of the side plate and increase the energy density of the battery. Directly connecting the side plate to the first plate by injection molding can simplify a forming process, enhance the connection strength between the side plate and the first plate, and improve the sealing performance.

In some embodiments, the first plate and the side plate are both made of metal, and a thickness of the side plate is less than a thickness of the first plate.

Metal materials have high strength, so making the first plate and the side plate from metal materials can enhance the overall structural strength of the box and improve the reliability of the battery. The side plate does not need to bear the battery cell, and the strength requirements for the side plate are lower relative to the strength requirements for the first plate. Therefore, the side plate can have a smaller thickness to reduce the weight of the side plate and increase the energy density while meeting the strength requirements.

In some embodiments, the first plate includes a bearing wall and a connecting wall. The bearing wall is disposed opposite the second plate and connected to the battery cell. The connecting wall is connected to an edge of the bearing wall and encloses the recess, the recess is recessed relative to a surface of the bearing wall facing the second plate, at least part of the connecting wall protrudes from a surface of the bearing wall away from the second plate, and the connecting wall is connected to the side plate.

Forming the recess by bending the connecting wall can reduce strength loss of the first plate caused by provision of the recess. At least part of the connecting wall protrudes from the surface of the bearing wall away from the second plate, which can increase a depth of the recess, and increase a connection area and connection strength between the connecting wall and the side plate. The connection between the connecting wall and the side plate can reduce the risk of interference between the side plate and the battery cell, and increase internal space of the box.

In some embodiments, the connecting wall includes a first portion and a second portion that are continuously disposed, the first portion is connected to the bearing wall and encloses the recess, and the second portion extends from an end portion of the first portion away from the bearing wall and protrudes from a surface of the bearing wall facing the second plate. The side plate is connected to the first portion, and the second portion is located on a side of the side plate away from the accommodating cavity.

The portion of the side plate extending into a first recess can be connected to the first portion to achieve fixation of the side plate to the first plate. The second portion can limit the side plate from the outside, to restrict deformation of the side plate in a direction away from the accommodating cavity, improving the stability of the connection between the side plate and the first plate, and improving the reliability of the battery.

In some embodiments, the battery further includes a reinforcing plate, and the reinforcing plate is disposed on a side of the bearing wall away from the second plate and fixed to the bearing wall.

The reinforcing plate can increase the bearing capacity of the bearing wall, reduce the deformation of the bearing wall when the battery is subjected to external impact, reduce the risk of failure in the connection between the battery cell and the bearing wall, and improve the stability of the battery cell and the reliability of the battery.

In some embodiments, the connecting wall has an end surface at an end away from the second plate, and the end surface is flush with a surface of the reinforcing plate away from the bearing wall.

During production, transportation, installation, or use of the battery, the reinforcing plate and the end surface may both be in contact with an external bearing mechanism, and the bearing mechanism can support both the reinforcing plate and the connecting wall, reducing a pressure applied to the reinforcing plate and the connecting wall, thereby reducing the risk of deformation of the connecting wall and the reinforcing plate, and improving the reliability of the battery.

In some embodiments, the battery further includes a reinforcing plate, and the reinforcing plate is disposed on a side of the first plate away from the second plate and fixed to the first plate. By providing the reinforcing plate, the bearing capacity of the first plate can be increased, deformation of the first plate when the battery is subjected to external impact can be reduced, and thus the reliability of the battery is improved.

In some embodiments, a flow channel for a heat exchange medium to flow is provided inside the reinforcing plate. While flowing through the reinforcing plate, the heat exchange medium can exchange heat with the battery cell through the reinforcing plate and the first plate, so that the battery cell operates within a suitable temperature range, improving the cycling performance of the battery cell. The reinforcing plate has both a reinforcement function and a heat exchange function, which can simplify the structure of the battery, increase the integration degree of the battery, and increase the energy density of the battery.

In some embodiments, the battery cell is connected to the first plate. In a thickness direction of the first plate, the battery cell covers at least part of the recess. The battery cell can utilize space on an upper side of the recess, thereby increasing the space utilization rate and the energy density of the battery.

In some embodiments, the box includes multiple side plates, and the multiple side plates are integrally connected to form a frame. The recess is annular, and each side plate is inserted into the recess and connected to the first plate.

The recess can position the multiple side plates during the process of assembling the box, thereby improving the assembly efficiency of the box and the production efficiency of the battery. The first plate can limit the frame, improving the stability of the box and the reliability of the battery.

In some embodiments, an end of the frame away from the first plate has an opening. At least part of the second plate is inserted into the opening and connected to the frame. Inserting at least part of the second plate into the frame can reduce a maximum size of the battery, increase the space utilization rate, and increase the energy density of the battery.

In some embodiments, an inner side of the at least one side plate is provided with a positioning protrusion, and the positioning protrusion is located on a side of the second plate facing the first plate and abuts against the second plate.

The positioning protrusion can limit the second plate during the process of inserting the second plate into the opening, reducing the risk of the second plate being inserted too deeply into the frame, thereby simplifying the assembly process and improving the assembly efficiency of the box.

In some embodiments, an accommodating groove is formed between a portion of the second plate inserted into the opening and an inner surface of the frame. The battery further includes a sealant filling the accommodating groove.

The sealant can not only connect the frame and the second plate but also seal a gap between the second plate and the frame, improving the sealing performance. Providing the sealant in the accommodating groove on an inner side of the frame can increase the space utilization rate, reduce the maximum size of the battery, and increase the energy density of the battery.

According to a second aspect, the present application provides an electric apparatus, which includes the battery provided according to any embodiment of the first aspect, where the battery is configured to provide electrical energy.

### BRIEF DESCRIPTION OF DRAWINGS

The features, advantages, and technical effects of exemplary embodiments of the present application are described below with reference to the accompanying drawings.
FIG. 1 is a schematic structural diagram of a vehicle provided by some embodiments of the present application;
FIG. 2 is a schematic exploded view of a battery provided by some embodiments of the present application;
FIG. 3 is a schematic cross-sectional view of a battery provided by some embodiments of the present application;
FIG. 4 is a schematic enlarged view of a circular frame A in FIG. 3;
FIG. 5 is a schematic structural diagram of a first plate of a box of a battery provided by some embodiments of the present application;
FIG. 6 is a schematic enlarged view of a circular frame in FIG. 5;
FIG. 7 is another schematic cross-sectional view of a battery provided by some embodiments of the present application;
FIG. 8 is a schematic enlarged view of a circular frame in FIG. 7;
FIG. 9 is a schematic partial cross-sectional view of a battery provided by some other embodiments of the present application;
FIG. 10 is a schematic enlarged view of a circular frame B in FIG. 3;
FIG. 11 is a schematic exploded view of a box of a battery provided by some embodiments of the present application; and
FIG. 12 is a schematic enlarged view of a circular frame in FIG. 11.

In the accompanying drawings, the figures are not necessarily drawn to actual scale.

Reference numerals in the drawings are as follows:
1. vehicle; 2. battery; 3. controller; 4. motor;
10. battery cell;
20. box;
21. first plate; 211. recess; 212. bearing wall; 212a. first surface; 212b. second surface; 213. connecting wall; 2131. end surface; 214. first portion; 214a. first section; 214b. second section; 214c. third section; 215. second portion;
22. second plate; 221. bent portion;
23. side plate; 231. filling portion; 232. plate body portion; 233. positioning protrusion;
24. frame; 241. opening;
30. adhesive; 31. first adhesive; 32. second adhesive;
40. reinforcing plate; 41. flow channel;
50. accommodating groove; 60. sealant;
S. accommodating cavity; Z. first direction; X. second direction; and Y. third direction.

### DESCRIPTION OF EMBODIMENTS

To make the objectives, technical solutions, and advantages of embodiments of the present application clearer, the technical solutions in the embodiments of the present application are clearly described below in conjunction with the accompanying drawings in the embodiments of the present application. Obviously, the described embodiments are some embodiments rather than all embodiments of the present application. Based on the embodiments in the present application, all other embodiments obtained by those of ordinary skill in the art without creative efforts fall within the protection scope of the present application.

Unless otherwise defined, all technical and scientific terms used in the present application have the same meanings as commonly understood by those skilled in the technical field to which the present application belongs. The terms used in the specification of the present application in the present application are only for the purpose of describing specific embodiments, and are not intended to limit the present application. The terms "include", "comprise", "have", and any variations thereof in the specification and claims of the present application and the above description of the drawings are intended to cover non-exclusive inclusion. The terms "first", "second", and the like in the specification and claims of the present application or the above drawings are used to distinguish different objects rather than to describe a specific order or primary-secondary relationship.

The mention of "an embodiment" in the present application means that specific features, structures, or characteristics described in conjunction with this embodiment can be included in at least one embodiment of the present application. The appearance of the phrase at various places in the specification does not necessarily refer to the same embodiment, nor is it an independent or alternative embodiment that is mutually exclusive with other embodiments.

In the description of the present application, it should be noted that, unless otherwise clearly specified and limited, the terms "installation", "connection", "join", or "attachment" should be understood in a broad sense, for example, it may be a fixed connection, a detachable connection, or an integral connection; it may be a direct connection or an indirect connection through an intermediate medium; and it may be a communication between two elements. For those of ordinary skill in the art, the specific meanings of the above terms in the present application can be understood according to specific situations.

The term "and/or" in the present application is merely an association relationship describing associated objects, indicating that three relationships may exist. For example, A and/or B may indicate the following three cases: only A exists, both A and B exist, and only B exists. In addition, the character "/" in the present application generally indicates that the contextually associated objects are in an "or" relationship.

In the embodiments of the present application, the same reference numerals indicate the same components, and for brevity, detailed descriptions of the same components in different embodiments are omitted. It should be understood that the thicknesses, lengths and widths of various components in the embodiments of the present application shown in the drawings, as well as the overall thickness, length and width of the integrated apparatus, are only exemplary illustrations and should not constitute any limitation on the present application.

"Multiple" appearing in the present application means more than two (including two).

In the embodiments of the present application, the battery cell may be a secondary battery, and the secondary battery refers to a battery cell that can continue to be used by activating an active material through charging after the battery cell is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead-acid battery cell, or the like, which is not limited in the embodiments of the present application.

A battery cell generally includes an electrode assembly. The electrode assembly includes a positive electrode, a negative electrode, and a separator. During a charging and discharging process of the battery cell, active ions (such as lithium ions) are intercalated and deintercalated back and forth between the positive electrode and the negative electrode. The separator is disposed between the positive electrode and the negative electrode, and can prevent short circuits between the positive and negative electrodes while allowing active ions to pass through.

In some embodiments, the battery cell may include a housing. The housing is configured to encapsulate components such as the electrode assembly and an electrolyte. The housing may be a steel housing, an aluminum housing, a plastic housing (such as polypropylene), a composite metal housing (such as a copper-aluminum composite housing), an aluminum-plastic film, or the like.

In an example, the battery cell may be a cylindrical battery cell, a prismatic battery cell, a pouch battery cell, or a battery cell of other shapes. The prismatic battery cell includes a square-shell battery cell, a blade-shaped battery cell, a multi-prism battery, where the multi-prism battery is, for example, a hexagonal prism battery or the like, which is not particularly limited in the present application.

The battery mentioned in the embodiments of the present application refers to a single physical module that includes one or more battery cells to provide higher voltage and capacity.

In some embodiments, the battery may be a battery pack, and the battery pack includes a box and a battery cell, and the battery cell or battery module is accommodated in the box. The box can protect the battery cell, thereby reducing pollution caused by external impurities to the battery cell, and extending the service life of the battery cell.

In a production process of the battery, the assembly efficiency of the box directly affects the production efficiency of the battery. In an assembly process of the box, lack of positioning structures between components constituting the box results in low assembly efficiency of the box.

In view of this, an embodiment of the present application provides a battery, which includes a box and a battery cell accommodated in the box. The box includes a first plate, a second plate, and at least one side plate. The first plate and the second plate are disposed opposite each other, the at least one side plate is connected to the first plate and the second plate, and encloses an accommodating cavity together with the first plate and the second plate, and the battery cell is disposed in the accommodating cavity. A side of the first plate facing the second plate is provided with a recess, and the at least one side plate is inserted into the recess and connected to the first plate. By providing the recess on the first plate, the side plate can be positioned, facilitating the connection between the first plate and the side plate, and improving the assembly efficiency of the box.

The battery described in this embodiment of the present application is suitable for electric apparatuses that use batteries.

The battery cell, battery, and electric apparatus disclosed in this embodiment of the present application can be used in electric apparatuses that use batteries as power sources or various energy storage systems that use batteries as energy storage elements. The electric apparatuses may be, but are not limited to, mobile phones, tablets, notebook computers, electric toys, electric tools, battery cars, electric vehicles, ships, and spacecraft. Electric toys may include fixed or mobile electric toys, such as game consoles, electric toy cars, electric toy ships, and electric toy aircrafts. Spacecraft may include airplanes, rockets, space shuttles, spaceships, and the like.

For ease of description, the electric apparatus being a vehicle is used as an example for description in the following embodiments.

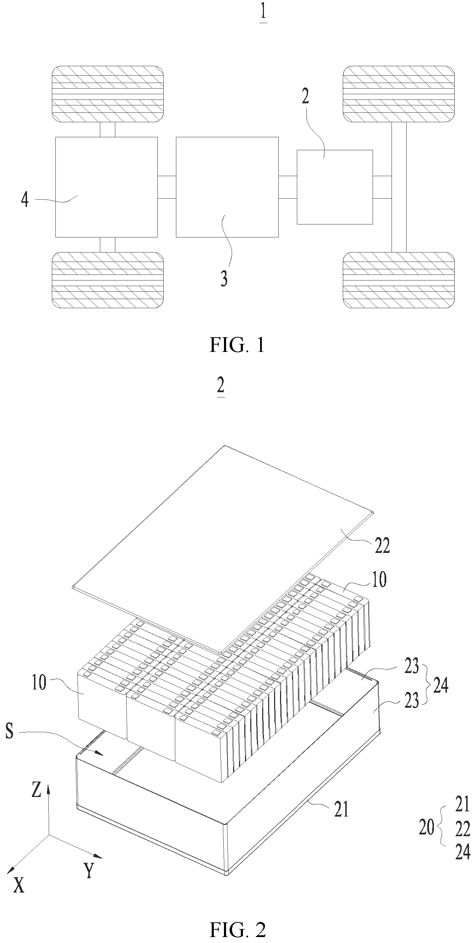

FIG. 1 is a schematic structural diagram of a vehicle provided by some embodiments of the present application.

As shown in FIG. 1, a battery 2 is provided inside a vehicle 1, and the battery 2 may be provided at the bottom, front, or rear of the vehicle 1. The battery 2 may be used for power supply of the vehicle 1. For example, the battery 2 can serve as an operating power source of the vehicle 1.

The vehicle 1 may further include a controller 3 and a motor 4, and the controller 3 is configured to control the battery 2 to supply power to the motor 4, for example, for the power needs of starting, navigation, and driving of the vehicle 1.

In some embodiments of the present application, the battery 2 can not only serve as an operating power source of the vehicle 1, but also serve as a driving power source of the vehicle 1, replacing or partially replacing fuel or natural gas to provide driving power for the vehicle 1.

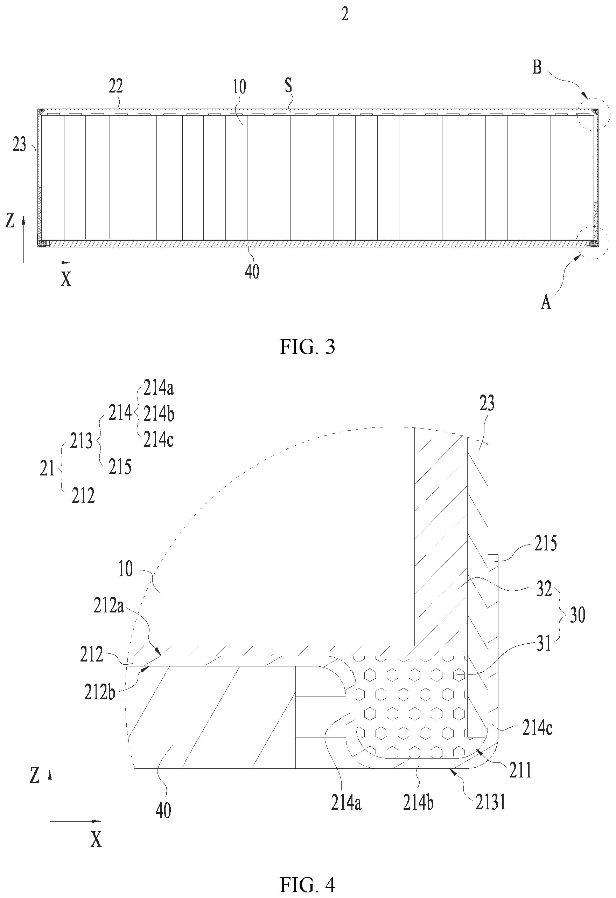

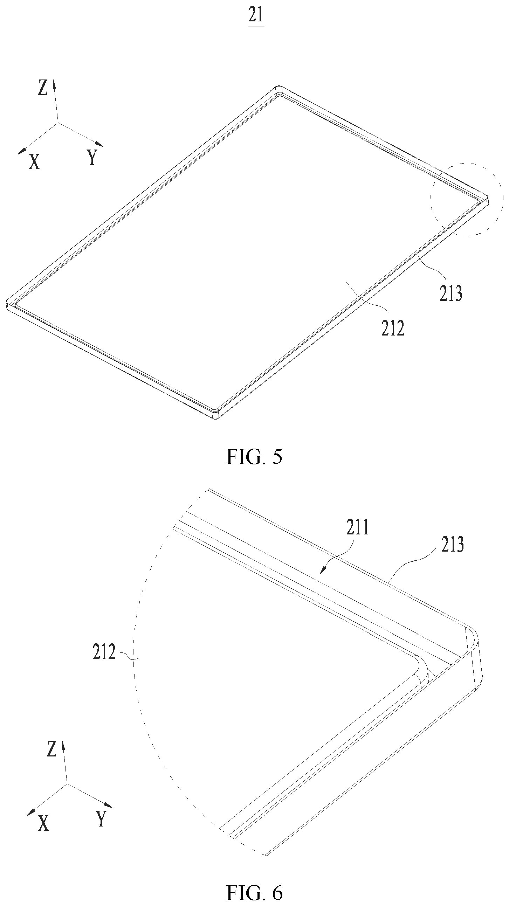

FIG. 2 is a schematic exploded view of a battery provided by some embodiments of the present application; FIG. 3 is a schematic cross-sectional view of a battery provided by some embodiments of the present application; FIG. 4 is a schematic enlarged view of a circular frame A in FIG. 3; FIG. 5 is a schematic structural diagram of a first plate of a box of a battery provided by some embodiments of the present application; and FIG. 6 is a schematic enlarged view of a circular frame in FIG. 5.

Referring to FIG. 2 to FIG. 6, the battery 2 of these embodiments of the present application includes a box 20 and a battery cell 10. The box 20 includes a first plate 21, a second plate 22, and at least one side plate 23. The first plate 21 and the second plate 22 are disposed opposite each other, the at least one side plate 23 is connected to the first plate 21 and the second plate 22, and encloses an accommodating cavity S together with the first plate 21 and the second plate 22, and the battery cell 10 is disposed in the accommodating cavity S. A side of the first plate 21 facing the second plate 22 is provided with a recess 211, and the at least one side plate 23 is inserted into the recess 211 and connected to the first plate 21.

The battery cell 10 may be the smallest unit constituting the battery 2.

In the battery 2, there may be one or multiple battery cells 10. If there are multiple battery cells 10, the multiple battery cells 10 may be connected in series, in parallel, or in series-parallel, where being connected in series-parallel refers to a combination of both a series connection and a parallel connection between the multiple battery cells 10. The multiple battery cells 10 may be directly connected in series, in parallel, or in series-parallel, and then an entirety formed by the multiple battery cells 10 is accommodated in the box 20. Certainly, multiple battery cells 10 may alternatively first be connected in series, in parallel, or in series-parallel to form a battery module, and multiple battery modules are then connected in series, in parallel, or in series-parallel to form an entirety that is accommodated in the box 20.

The first plate 21 and the second plate 22 are disposed opposite each other, and the battery cell 10 may be disposed between the first plate 21 and the second plate 22. The battery cell 10 may be fixed to the first plate 21, or fixed to the second plate 22, or fixed to both the first plate 21 and the second plate 22.

The first plate 21 and the side plate 23 may be made of the same material or different materials. The second plate 22 and the side plate 23 may be made of the same material or different materials.

There may be one or multiple side plates 23. In some examples, there may be one side plate 23, where the one side plate 23 may be a cylindrical structure, and the side plate 23, the first plate 21, and the second plate 22 are connected to form a cylindrical box 20. In some other examples, there may be multiple side plates 23, where the multiple side plates 23 are sequentially connected to form a frame 24, and the frame 24, the first plate 21, and the second plate 22 are connected to form a prismatic box 20. Optionally, there are four side plates 23, and the box 20 may be rectangular.

It can be understood that the insertion of the side plate 23 into the recess 211 means that at least part of the side plate 23 is inserted into the recess 211.

If the box 20 includes one side plate 23, the side plate 23 is inserted into the recess 211 and connected to the first plate 21. If the box 20 includes multiple side plates 23, one side plate 23 may be inserted into the recess 211, or more than two side plates 23 may be inserted into the recess 211.

The first plate 21 and the side plate 23 that is inserted into the recess 211 may be separately formed, for example, they may be connected together by adhesion, snapping, fastener connection, welding, or other methods.

The second plate 22 and the at least one side plate 23 are separately formed, for example, they may be connected together by adhesion, snapping, fastener connection, welding, or other methods. Alternatively, the second plate 22 and the at least one side plate 23 are integrally formed.

In some examples, the first plate 21, the multiple side plates 23, and the second plate 22 are each separately formed, and the multiple side plates 23 are integrally connected to form a frame 24. In some other examples, some side plates 23 are integrally formed with the first plate 21, and some other side plates 23 are integrally formed with the second plate 22, where the side plates 23 integrally formed with the second plate 22 are inserted into the recess 211 of the first plate 21. For example, when there are four side plates 23, two side plates 23 are connected to the first plate 21 to form a U-shaped structure, and the other two side plates 23 are connected to the second plate 22 to form a U-shaped structure. In still some other examples, multiple side plates 23 are integrally formed with the second plate 22, and multiple side plates 23 are separately formed with the first plate 21.

In these embodiments of the present application, the recess 211 can position the side plate 23 during the process of assembling the box 20, to achieve the connection between the first plate 21 and the side plate 23, thereby improving the assembly efficiency of the box 20 and the production efficiency of the battery 2. The first plate 21 can limit the portion of the side plate 23 inserted into the recess 211, thereby enhancing the connection strength between the first plate 21 and the side plate 23, and improving the stability of the box 20 and the reliability of the battery 2.

In some embodiments, the battery cell 10 is connected to the first plate 21, and the first plate 21 may be configured to bear the gravity of the battery cell 10.

After the battery 2 is installed in an electric apparatus, the battery cell 10 may be located on an upper side of the first plate 21 or on a lower side of the first plate 21.

In some embodiments, the first plate 21 and the second plate 22 are arranged along a first direction Z. Exemplarily, the first direction Z is parallel to a thickness direction of the first plate 21 and a thickness direction of the second plate 22.

In some embodiments, the box 20 includes multiple side plates 23, and the multiple side plates 23 are integrally connected to form a frame 24. The recess 211 is annular, and each side plate 23 is inserted into the recess 211 and connected to the first plate 21.

The recess 211 can position the multiple side plates 23 during the process of assembling the box 20, thereby improving the assembly efficiency of the box 20 and the production efficiency of the battery 2. The first plate 21 can limit the frame 24, improving the stability of the box 20 and the reliability of the battery 2.

In some embodiments, there are four side plates 23, and the frame 24 may be a rectangular frame.

In some embodiments, adjacent side plates 23 are in transition connection through a rounded corner.

In some embodiments, the box 20 includes a lower box body, and the lower box body includes the first plate 21 and the side plate 23. The lower box body has a cavity, and the first plate 21 and the side plate 23 enclose to form the cavity with an opening.

If the lower box body is an integrally formed structure, for example, if the lower box body is integrally formed through an extrusion forming process, a size of the side plate along the first direction directly affects a thickness of the side plate. If the size of the side plate along the first direction is relatively large, due to the requirements on the extrusion forming process, the side plate also needs to have a relatively large thickness, resulting in a relatively large overall weight of the box.

The first plate 21 and the side plate 23 of these embodiments of the present application are separately formed, so that thickness requirements for the side plate 23 can be reduced during the forming of the side plate 23, reducing an increase amplitude in the weight of the box 20 when the size of the side plate 23 along the first direction Z increases, thereby increasing the energy density of the battery 2.

In some embodiments, the first plate 21 and the side plate 23 may be made of the same material or different materials.

Optionally, a density of the side plate 23 may be less than a density of the first plate 21. The side plate 23 may have a smaller density to reduce the weight of the side plate 23 and increase the energy density of the battery 2.

In some embodiments, the first plate 21 may be made of metal.

Metal materials have high strength, so using a metal material to make the first plate 21 can increase the bearing capacity of the first plate 21, improve the stability of the battery cell 10, and enhance the overall structural strength of the box 20, thereby improving the reliability of the battery 2.

Optionally, the first plate 21 may be made of steel, nickel-plated steel, aluminum, aluminum alloy, copper, or other metal materials.

In some embodiments, the first plate 21 may be made of steel.

In some embodiments, the battery 2 further includes an adhesive 30, and at least part of the adhesive 30 is accommodated in the recess 211 and adheres the side plate 23 to the first plate 21.

The adhesive 30 may be entirely accommodated in the recess 211 or only partially accommodated in the recess 211.

Using the adhesive 30 to adhere the first plate 21 and the side plate 23 can reduce the requirements on the material of the first plate 21 and the material of the side plate 23, achieving more flexible material selection of the first plate 21 and the side plate 23. The adhesive 30 can also fill a gap between the first plate 21 and the side plate 23 to play a sealing role and improve the sealing performance for the box 20. The recess 211 can provide space for the adhesive 30, making the adhesive 30 occupy less space of the box 20 for accommodating the battery cell 10, thereby increasing the space utilization rate and the energy density of the battery 2.

In some examples, during assembly of the box 20, the side plate 23 may be inserted into the recess 211 first, then glue is injected into the recess 211, and after the glue is cured to form the adhesive 30, the adhesive 30 adheres the side plate 23 to the first plate 21. In some other examples, during assembly of the box 20, glue may be injected into the recess 211 first, then the side plate 23 is inserted into the recess 211, and after the glue is cured to form the adhesive 30, the adhesive 30 adheres the side plate 23 to the first plate 21.

In some embodiments, the first plate 21 and the side plate 23 are both made of metal, and a thickness of the side plate 23 is less than a thickness of the first plate 21.

Metal materials have high strength, so using a metal material to make the first plate 21 and the side plate 23 can enhance the overall structural strength of the box 20 and improve the reliability of the battery 2. The side plate 23 does not need to bear the battery cell 10, and strength requirements for the side plate 23 are lower relative to strength requirements for the first plate 21. Therefore, the side plate 23 can have a smaller thickness to reduce the weight of the side plate 23 and increase the energy density while meeting the strength requirements.

In addition, since the side plate 23 and the first plate 21 are separately formed, the side plate 23 can have a smaller thickness than the first plate 21.

In some embodiments, the thickness of the side plate 23 is 0.2 mm to 2 mm. Optionally, the thickness of the side plate 23 is 0.2 mm, 0.5 mm, 0.8 mm, 1 mm, 1.2 mm, 1.5 mm, 1.8 mm, or 2 mm.

In some embodiments, the thickness of the side plate 23 is 0.5 mm to 1 mm.

In some embodiments, the first plate 21 and the side plate 23 are both made of metal, and the battery 2 further includes an adhesive 30, where at least part of the adhesive 30 is accommodated in the recess 211 and adheres the side plate 23 to the first plate 21.

As compared with the solution in which the first plate and the side plate are welded, using the adhesive 30 to adhere the first plate 21 to the side plate 23 can reduce thickness requirements for the side plate 23. Specifically, if the first plate and the side plate are connected by welding, both the first plate and the side plate need to have a specific thickness. If the thickness of the side plate or the first plate is too small, problems such as burn-through and cracking are likely to occur. In these embodiments of the present application, the adhesive 30 is used to adhere the first plate 21 to the side plate 23, which can reduce the thickness requirements for the side plate 23, reduce the weight of the box 20, and increase the energy density of the battery 2.

In some embodiments, the battery cell 10 is connected to the first plate 21. In a thickness direction of the first plate 21, the battery cell 10 covers at least part of the recess 211.

The battery cell 10 can utilize space on an upper side of the recess 211, thereby increasing the space utilization rate and the energy density of the battery 2.

In some embodiments, the first plate 21 includes a bearing wall 212 and a connecting wall 213. The bearing wall 212 is disposed opposite the second plate 22 and connected to the battery cell 10. The connecting wall 213 is connected to an edge of the bearing wall 212 and encloses the recess 211, the recess 211 is recessed relative to a surface of the bearing wall 212 facing the second plate 22, at least part of the connecting wall 213 protrudes from a surface of the bearing wall 212 away from the second plate 22, and the connecting wall 213 is connected to the side plate 23.

Exemplarily, the bearing wall 212 is a main portion of the first plate 21 for bearing the battery cell 10, and a thickness direction of the bearing wall 212 may be considered as the thickness direction of the first plate 21.

There may be one or multiple connecting walls 213.

In some examples, there are two connecting walls 213. The two connecting walls 213 are connected to two ends of the bearing wall 212 along a second direction X, each connecting wall 213 encloses one recess 211, and two side plates 23 are respectively inserted into the two recesses 211 and connected to the connecting walls 213. In some other examples, there are two connecting walls 213. The two connecting walls 213 are connected to two ends of the bearing wall 212 along a third direction Y, each connecting wall 213 encloses one recess 211, and two side plates 23 are respectively inserted into the two recesses 211 and connected to the connecting walls 213. In some embodiments, there is one connecting wall 213 which surrounds one whole circumference of the bearing wall 212, the recess 211 is an annular structure, and each side plate 23 is inserted into the recess 211.

Exemplarily, the first direction Z, the second direction X, and the third direction Y are perpendicular to each other.

Forming the recess 211 by bending the connecting wall 213 can reduce strength loss of the first plate 21 caused by provision of the recess 211. At least part of the connecting wall 213 protrudes from the surface of the bearing wall 212 away from the second plate 22, which can increase a depth of the recess 211, and increasing a connection area and connection strength between the connecting wall 213 and the side plate 23. The connection between the connecting wall 213 and the side plate 23 can reduce the risk of interference between the side plate 23 and the battery cell 10, and increase internal space of the box 20.

In some embodiments, the connecting wall 213 surrounds the periphery of the bearing wall 212. The recess 211 is an annular structure surrounding the bearing wall 212.

In some examples, the connecting wall 213 includes a first portion 214 and a second portion 215 that are continuously disposed, the first portion 214 is connected to the bearing wall 212 and encloses the recess 211, and the second portion 215 extends from an end portion of the first portion 214 away from the bearing wall 212 and protrudes from a surface of the bearing wall 212 facing the second plate 22. The side plate 23 is connected to the first portion 214, and the second portion 215 is located on a side of the side plate 23 away from the accommodating cavity S.

Exemplarily, the surface of the bearing wall 212 facing the second plate 22 may be a first surface 212a, and the surface of the bearing wall 212 away from the second plate 22 is a second surface 212b. Optionally, the first surface 212a and the second surface 212b are both perpendicular to the first direction Z.

The first portion 214 may be a convex hull structure, and a side thereof facing the second plate 22 forms the recess 211. At least part of the first portion 214 protrudes from the second surface 212b.

The first portion 214 and the second portion 215 may take a plane where the first surface 212a is located as an interface. A portion of the connecting wall 213 on a side of the interface facing the second plate 22 is the second portion 215, and a portion of the connecting wall 213 on a side of the interface away from the second plate 22 is the first portion 214.

The second portion 215 may be connected to the side plate 23 or not connected to the side plate 23. Optionally, at least part of the second portion 215 is adhered to the side plate 23.

A portion of the side plate 23 extending into the recess 211 can be connected to the first portion 214 to achieve fixation of the side plate 23 to the first plate 21. The second portion 215 can limit the side plate 23 from the outside, to restrict deformation of the side plate 23 in a direction away from the accommodating cavity S, improving the stability of the connection between the side plate 23 and the first plate 21, and improving the reliability of the battery 2.

In some embodiments, the second portion 215 is perpendicular to the bearing wall 212. In other words, a thickness direction of the second portion 215 is perpendicular to the thickness direction of the bearing wall 212.

The second portion 215 can position the side plate 23 so that the side plate 23 is substantially perpendicular to the bearing wall 212.

In some embodiments, a cross section of the first portion 214 may be U-shaped.

In some embodiments, the first portion 214 includes a first section 214a, a second section 214b, and a third section 214c. The first section 214a is connected to an edge of the bearing wall 212, extends along a direction away from the second plate 22, and surrounds the bearing wall 212. The third section 214c surrounds the outside of the first section 214a and is spaced apart from the first section 214a. The second section 214b connects the first section 214a and the third section 214c. The first section 214a, the second section 214b, and the third section 214c enclose the recess 211. The second portion 215 is connected to the third section 214c. The side plate 23 is connected to the third section 214c.

In some embodiments, the third section 214c is perpendicular to the bearing wall 212, and the second portion 215 extends from an end portion of the third section 214c away from the second section 214b along the first direction Z.

In some embodiments, the second section 214b is parallel to the bearing wall 212.

In some embodiments, the battery cell 10 is adhered to the bearing wall 212. Optionally, the battery cell 10 is also adhered to the side plate 23. Adhering the battery cell 10 to both the bearing wall 212 and the side plate 23 can enhance the connection strength between the battery cell 10 and the box 20, thereby reducing the risk of failure in the connection between the battery cell 10 and the box 20.

Optionally, the adhesive 30 includes a first adhesive 31 and a second adhesive 32, the first adhesive 31 adheres the side plate 23 to the first plate 21, and the second adhesive 32 adheres the battery cell 10 to the bearing wall 212 and the side plate 23.

Exemplarily, during assembly of the battery 2, glue may be injected into the recess 211 first, then the side plate 23 is inserted into the recess 211, and after the glue is cured to form the first adhesive 31, the first adhesive 31 adheres the side plate 23 to the first plate 21 to form a lower box body; glue is applied onto the bearing wall 212, the battery cell 10 is pressed on the glue, and under the pressure, the glue overflows between the side plate 23 and the battery cell 10; and after the glue is cured to form the second adhesive 32, the second adhesive 32 adheres the battery cell 10 to the bearing wall 212 and the side plate 23.

In some embodiments, the battery 2 further includes a reinforcing plate 40, and the reinforcing plate 40 is disposed on a side of the first plate 21 away from the second plate 22 and fixed to the first plate 21.

The reinforcing plate 40 may be integrally formed with the first plate 21 or separately formed. Optionally, the reinforcing plate 40 and the first plate 21 are separately formed, and they may be connected by welding, adhesion, snapping, fastener connection, or other methods.

The reinforcing plate 40 may be a hollow structure or a solid structure.

By providing the reinforcing plate 40, the bearing capacity of the first plate 21 can be increased, deformation of the first plate 21 when the battery 2 is subjected to external impact can be reduced, and thus the reliability of the battery 2 is improved.

In some embodiments, the reinforcing plate 40 is disposed on a side of the bearing wall 212 away from the second plate 22 and fixed to the bearing wall 212.

Exemplarily, the reinforcing plate 40 is attached to the second surface 212b. In the first direction Z, a height h by which the connecting wall 213 protrudes from the second surface 212b may be greater than, equal to, or less than a thickness of the reinforcing plate 40.

The reinforcing plate 40 can increase the bearing capacity of the bearing wall 212, reduce deformation of the bearing wall 212 when the battery 2 is subjected to external impact, reduce the risk of failure in the connection between the battery cell 10 and the bearing wall 212, and improve the stability of the battery cell 10 and the reliability of the battery 2.

In some embodiments, the connecting wall 213 has an end surface 2131 at an end away from the second plate 22, and the end surface 2131 is flush with a surface of the reinforcing plate 40 away from the bearing wall 212.

Exemplarily, the surface of the reinforcing plate 40 away from the bearing wall 212 and the end surface 2131 are both planes perpendicular to the first direction Z.

During production, transportation, installation, or use of the battery 2, the reinforcing plate 40 and the end surface 213l may both be in contact with an external bearing mechanism, and the bearing mechanism can support both the reinforcing plate 40 and the connecting wall 213, reducing a pressure applied to the reinforcing plate 40 and the connecting wall 213, thereby reducing the risk of deformation of the connecting wall 213 and the reinforcing plate 40, and improving the reliability of the battery 2.

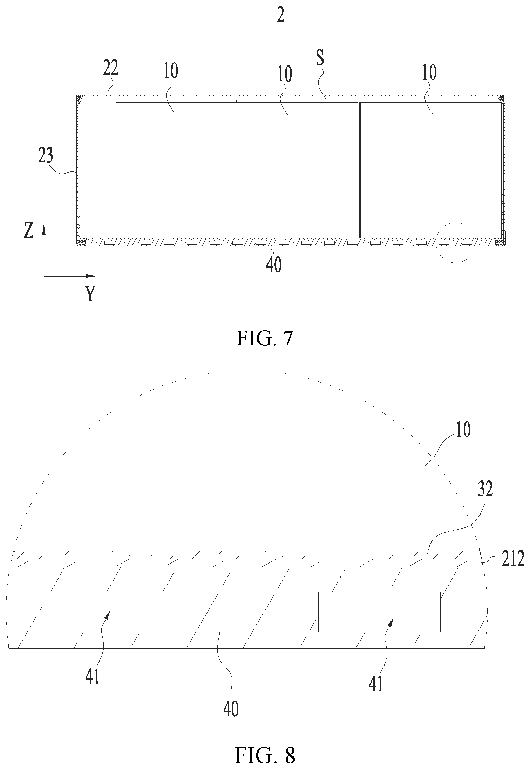

FIG. 7 is another schematic cross-sectional view of a battery provided by some embodiments of the present application; and FIG. 8 is a schematic enlarged view of a circular frame in FIG. 7.

Referring to FIG. 7 and FIG. 8, in some embodiments, a flow channel 41 for a heat exchange medium to flow is provided inside the reinforcing plate 40.

While flowing through the reinforcing plate 40, the heat exchange medium can exchange heat with the battery cell 10 through the reinforcing plate 40 and the first plate 21, so that the battery cell 10 operates within a suitable temperature range, improving the cycling performance of the battery cell 10. The reinforcing plate 40 has both a reinforcement function and a heat exchange function, which can simplify the structure of the battery 2, increase the integration degree of the battery 2, and increase the energy density of the battery 2.

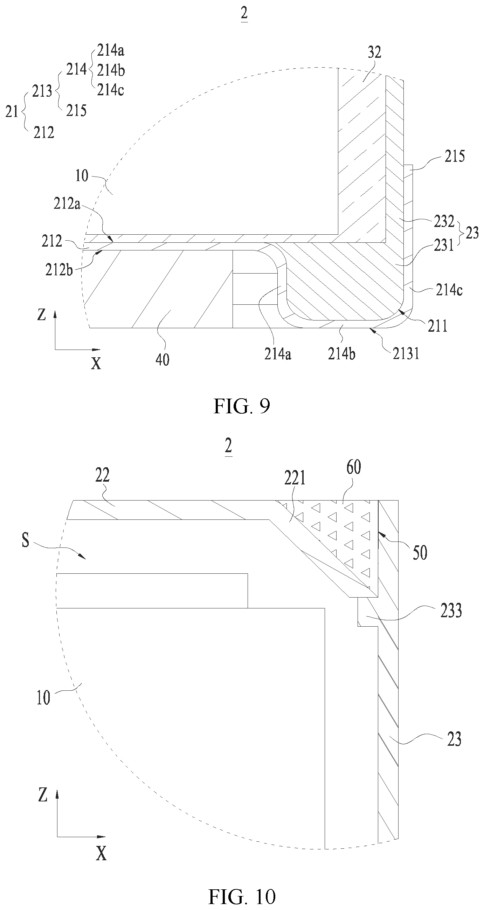

FIG. 9 is a schematic partial cross-sectional view of a battery provided by some other embodiments of the present application.

As shown in FIG. 9, in some embodiments, the side plate 23 and the first plate 21 are directly connected.

In some embodiments, the side plate 23 is made of plastic. Plastic has a small weight, so the use of a side plate 23 made of a plastic material can reduce the weight of the side plate 23 and increase the energy density of the battery 2.

In some embodiments, the side plate 23 is connected to the first plate 21 by injection molding.

Directly connecting the side plate 23 to the first plate 21 by injection molding can simplify the forming process, enhance the connection strength between the side plate 23 and the first plate 21, and improve the sealing performance.

In some embodiments, the first plate 21 is made of metal. Metal and plastic are different materials, and they are difficult to weld, so the side plate 23 can be connected to the first plate 21 by injection molding.

In some embodiments, nano surface treatment may be performed on the first plate 21 first to generate nano-level micropores in a surface of the first plate 21, and then the side plate 23 made of a plastic material is connected to the first plate 21 made of a metal material through integrated injection molding. By performing nano surface treatment on the first plate 21, a connection area between the first plate 21 and the side plate 23 can be increased, and thus the connection strength between the side plate 23 made of a plastic material and the first plate 21 made of a metal material is improved.

In some embodiments, the side plate 23 fully fills the recess 211.

In some embodiments, the side plate 23 includes a filling portion 231 and a plate body portion 232, the filling portion 231 fills the recess 211, the plate body portion 232 extends from a surface of the filling portion 231 facing the second plate 22 and is perpendicular to the bearing wall 212, and the plate body portion 232 is connected to the second plate 22.

In some embodiments, a thickness of the plate body portion 232 may be greater than the thickness of the first plate 21. The side plate 23 is made of plastic, with a small weight. Under the premise that the weight of the side plate 23 meets the requirements, the plate body portion 232 may have a larger thickness to improve the strength of the side plate 23.

In some embodiments, the second portion 215 is located on a side of the plate body portion 232 away from the accommodating cavity S.

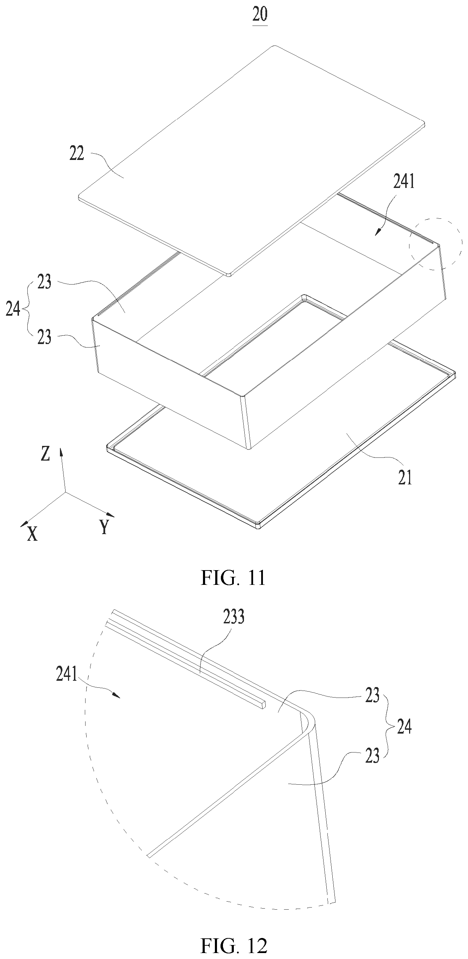

FIG. 10 is a schematic enlarged view of a circular frame B in FIG. 3; FIG. 11 is a schematic exploded view of a box of a battery provided by some embodiments of the present application; and FIG. 12 is a schematic enlarged view of a circular frame in FIG. 11.

Referring to FIG. 10 to FIG. 12, in some embodiments, an end of the frame 24 away from the first plate 21 has an opening 241. At least part of the second plate 22 is inserted into the opening 241 and connected to the frame 24.

The second plate 22 may be entirely inserted into the opening 241 or only partially inserted into the opening 241.

In these embodiments of the present application, at least part of the second plate 22 can be inserted into the frame 24 to reduce a maximum size of the battery 2, increase the space utilization rate, and increase the energy density of the battery 2.

In some embodiments, the second plate 22 is entirely inserted into the opening 241. In the first direction Z, the second plate 22 does not increase the maximum size of the box 20.

In some embodiments, an inner side of the at least one side plate 23 is provided with a positioning protrusion 233, and the positioning protrusion 233 is located on a side of the second plate 22 facing the first plate 21 and abuts against the second plate 22.

The inner side of the side plate 23 refers to a side of the side plate 23 facing the accommodating cavity S.

In these embodiments of the present application, only one side plate 23 may be provided with the positioning protrusion 233, or the multiple side plates 23 may each be provided with the positioning protrusion 233.

For the side plate 23 provided with the positioning protrusion 233, the side plate 23 may be provided with one positioning protrusion 233 or multiple positioning protrusions 233.

In these embodiments of the present application, the positioning protrusion 233 can limit the second plate 22 during the process of inserting the second plate 22 into the opening 241, reducing the risk of the second plate 22 being inserted too deeply into the frame 24, thereby simplifying the assembly process and improving the assembly efficiency of the box 20.

In some embodiments, the frame 24 is provided with multiple positioning protrusions 233, and the multiple positioning protrusions 233 may be spaced apart along a circumferential direction of the frame 24. Optionally, each side plate 23 is provided with one positioning protrusion 233.

In some embodiments, an accommodating groove 50 is formed between a portion of the second plate 22 inserted into the opening 241 and an inner surface of the frame 24. The battery 2 further includes a sealant 60 filling the accommodating groove 50.

The inner surface of the frame 24 is a surface of the frame 24 facing the accommodating cavity S. The inner surface of the frame 24 includes inner surfaces of the multiple side plates 23.

The sealant 60 can not only connect the frame 24 and the second plate 22 but also seal a gap between the second plate 22 and the frame 24, improving the sealing performance. Providing the sealant 60 in the accommodating groove 50 on an inner side of the frame 24 can increase the space utilization rate, reduce the maximum size of the battery 2, and increase the energy density of the battery 2.

As compared with a solution in which a flange structure is provided on the frame and the sealant is clamped by the second plate and the flange structure to achieve sealing, these embodiments of the present application can reduce the maximum size of the battery 2 and increase the energy density of the battery 2.

In some embodiments, the accommodating groove 50 surrounds the outside of the second plate 22.

In some embodiments, the periphery of the second plate 22 is bent to form a bent portion 221. The accommodating groove 50 is formed between the bent portion 221 and the inner surface of the frame 24.

According to some embodiments of the present application, the present application further provides an electric apparatus, including the battery of any of the above embodiments, where the battery is configured to provide electrical energy for the electric apparatus. The electric apparatus may be any device or system that uses a battery as described above.

Referring to FIG. 2 to FIG. 8, embodiments of the present application provide a battery 2, which includes a box 20, a battery cell 10, and a reinforcing plate 40.

The box 20 includes a first plate 21, a second plate 22, and four side plates 23. The four side plates 23 are sequentially connected to form a rectangular frame 24. The first plate 21 and the second plate 22 are disposed opposite each other along a first direction Z. The frame 24 is connected to the first plate 21 and the second plate 22, and encloses an accommodating cavity S together with the first plate 21 and the second plate 22. The battery cell 10 is disposed in the accommodating cavity S.

The first plate 21 includes a bearing wall 212 and a connecting wall 213 surrounding the bearing wall 212. The bearing wall 212 is disposed opposite the second plate 22 and connected to the battery cell 10. The connecting wall 213 is connected to an edge of the bearing wall 212 and encloses a recess 211, the recess 211 is recessed relative to a surface of the bearing wall 212 facing the second plate 22, and at least part of the connecting wall 213 protrudes from a surface of the bearing wall 212 away from the second plate 22.

The recess 211 is annular, and the frame 24 is inserted into the recess 211. The recess 211 is filled with an adhesive 30, and the adhesive 30 adheres the frame 24 to the connecting wall 213.

The reinforcing plate 40 is disposed on a side of the bearing wall 212 away from the second plate 22 and fixed to the bearing wall 212. A flow channel 41 for a heat exchange medium to flow is provided inside the reinforcing plate 40.

An end of the frame 24 away from the first plate 21 has an opening 241. The second plate 22 is inserted into the opening 241. An accommodating groove 50 is formed between a portion of the second plate 22 inserted into the opening 241 and an inner surface of the frame 24. The battery 2 further includes a sealant 60 filling the accommodating groove 50.

Although the present application has been described with reference to preferred embodiments, various improvements can be made thereto and components therein can be replaced with equivalents without departing from the scope of the present application. In particular, as long as there is no structural conflict, the various technical features mentioned in the embodiments can be combined in any manner. The present application is not limited to the specific embodiments disclosed herein, but includes all technical solutions falling within the scope of the claims.

## Claims

1. A battery, comprising:
a battery cell; and
a box, comprising a first plate, a second plate, and at least one side plate, wherein the first plate and the second plate are disposed opposite each other, the at least one side plate is connected to the first plate and the second plate and encloses an accommodating cavity together with the first plate and the second plate, and the battery cell is disposed in the accommodating cavity;
wherein a side of the first plate facing the second plate is provided with a recess, and the at least one side plate is inserted into the recess and connected to the first plate.

2. The battery according to claim 1, wherein the battery further comprises an adhesive, and at least part of the adhesive is accommodated in the recess and adheres the side plate to the first plate.

3. The battery according to claim 1 or 2, wherein a density of the side plate is less than a density of the first plate.

4. The battery according to any one of claims 1 to 3, wherein the side plate is made of plastic, and the side plate is connected to the first plate by injection molding.

5. The battery according to any one of claims 1 to 3, wherein the first plate and the side plate are both made of metal, and a thickness of the side plate is less than a thickness of the first plate.

6. The battery according to any one of claims 1 to 5, wherein the first plate comprises:
a bearing wall, disposed opposite the second plate and connected to the battery cell; and
a connecting wall, connected to an edge of the bearing wall and enclosing the recess, wherein the recess is recessed relative to a surface of the bearing wall facing the second plate, at least part of the connecting wall protrudes from a surface of the bearing wall away from the second plate, and the connecting wall is connected to the side plate.

7. The battery according to claim 6, wherein the connecting wall comprises a first portion and a second portion that are continuously disposed, the first portion is connected to the bearing wall and encloses the recess, and the second portion extends from an end portion of the first portion away from the bearing wall and protrudes from a surface of the bearing wall facing the second plate; and
the side plate is connected to the first portion, and the second portion is located on a side of the side plate away from the accommodating cavity.

8. The battery according to claim 6 or 7, wherein the battery further comprises a reinforcing plate, and the reinforcing plate is disposed on a side of the bearing wall away from the second plate and fixed to the bearing wall.

9. The battery according to claim 8, wherein the connecting wall has an end surface at an end away from the second plate, and the end surface is flush with a surface of the reinforcing plate away from the bearing wall.

10. The battery according to any one of claims 1 to 9, wherein the battery further comprises a reinforcing plate, and the reinforcing plate is disposed on a side of the first plate away from the second plate and fixed to the first plate.

11. The battery according to any one of claims 8 to 10, wherein a flow channel for a heat exchange medium to flow is provided inside the reinforcing plate.

12. The battery according to any one of claims 1 to 11, wherein the battery cell is connected to the first plate; and
in a thickness direction of the first plate, the battery cell covers at least part of the recess.

13. The battery according to any one of claims 1 to 12, wherein the box comprises multiple side plates, and the multiple side plates are integrally connected to form a frame; and
the recess is annular, and each of the side plates is inserted into the recess and connected to the first plate.

14. The battery according to claim 13, wherein an end of the frame away from the first plate has an opening; and
at least part of the second plate is inserted into the opening and connected to the frame.

15. The battery according to claim 14, wherein an inner side of the at least one side plate is provided with a positioning protrusion, and the positioning protrusion is located on a side of the second plate facing the first plate and abuts against the second plate.

16. The battery according to claim 14 or 15, wherein an accommodating groove is formed between a portion of the second plate inserted into the opening and an inner surface of the frame; and
the battery further comprises a sealant filling the accommodating groove.

17. An electric apparatus, comprising the battery according to any one of claims 1 to 16, wherein the battery is configured to provide electrical energy.
